# EUROPÄISCHE PATENTANMELDUNG

(11) **EP 2 228 129 A1**
(43) Veröffentlichungstag der Anmeldung: **15.09.2010**
(21) Anmeldenummer: 10155410.3
(22) Anmeldetag: 04.03.2010
(51) Int. Cl.: B01J 49/00, C02F 1/42, G01N 27/06

(54) **Verfahren zur Überwachung des Regenerationsverlaufs einer Wasserenthärtungsanlage**

(30) Priorität: 09.03.2009 DE 102009011779
(71) Anmelder: Judo Wasseraufbereitung GmbH, 71364 Winnenden (DE)
(72) Erfinder: Dopslaff, Carsten, 71364, Winnenden (DE); Söcknick, Ralf, 70806, Kornwestheim (DE)
(74) Vertreter: Kohler Schmid Möbus

(57) **Zusammenfassung**

Ein Verfahren zur Überwachung einer Wasserenthärtungsanlage (1), wobei die Wasserenthärtungsanlage (1) umfasst
- eine Enthärtungsvorrichtung (4), insbesondere umfassend mindestens einen Tank mit einem lonentauscherharz (5),
- ein Vorratsgefäß (6), in dem festes Regeneriersalz zur Herstellung einer Regeneriermittellösung und/oder eine Regeneriermittellösung (7) bevorratet ist,
- einen Spülkanal (9) zur Ableitung von verbrauchter Regeneriermittellösung und Spülwasser während einer Regeneration,
- eine elektronische Steuereinrichtung (11), insbesondere zur automatischen Auslösung und Überwachung einer Regeneration der Enthärtungsvorrichtung (4) mit Regeneriermittellösung,

ist **dadurch gekennzeichnet, dass** die Leitfähigkeit der verbrauchten Regeneriermittellösung und/oder des Spülwassers im Spülkanal (9) während einer Regeneration mittels eines Leitfähigkeitssensors (10) bestimmt wird, und dass die experimentell bestimmte Leitfähigkeit mit einem in der elektronischen Steuereinrichtung (11) abgespeicherten Soll-Leitfähigkeitsprofil verglichen wird. Die Erfindung stellt ein Verfahren zur Verfügung, mit dem auf einfache und zuverlässige Weise die ordnungsgemäße Durchführung einer Regeneration einer Enthärtungsvorrichtung einer Wasserenthärtungsanlage überwacht werden kann, insbesondere so dass Härtedurchbrüche aufgrund einer fehlerhaften Regeneration zuverlässig ausgeschlossen werden können.

## Beschreibung

Die Erfindung betrifft ein Verfahren zur Überwachung einer Wasserenthärtungsanlage, wobei die Wasserenthärtungsanlage umfasst
- eine Enthärtungsvorrichtung, insbesondere umfassend mindestens einen Tank mit einem Ionentauscherharz,
- ein Vorratsgefäß, in dem festes Regeneriersalz zur Herstellung einer Regeneriermittellösung und/oder eine Regeneriermittellösung bevorratet ist,
- einen Spülkanal zur Ableitung von verbrauchter Regeneriermittellösung und Spülwasser während einer Regeneration,
- eine elektronische Steuereinrichtung, insbesondere zur automatischen Auslösung und Überwachung einer Regeneration der Enthärtungsvorrichtung mit Regeneriermittellösung.

Ein solches Verfahren ist beispielsweise bekannt durch die US 6,783,666 B2.

Wasserenthärtungsanlagen werden in verschiedenen Anwendungsbereichen eingesetzt, wenn enthärtetes oder teilenthärtetes Wasser aus technischen Gründen, gesundheitlichen Gründen oder aus Komfortgründen benötigt wird.

Eine Wasserenthärtungsanlage umfasst eine oder mehrere Enthärtungseinrichtungen, die in der Regel nach dem Ionenaustauschverfahren arbeiten. Bei der Enthärtung nach dem Ionenaustauschverfahren werden die im Wasser enthaltenen Härtebildner Calcium- und Magnesium-Ionen gegen Natrium-Ionen ausgetauscht. Dies geschieht mittels eines mit Natrium-Ionen beladenen Harzes (Ionenaustauscherharz). Bei Erschöpfung muss das Harz mit Salzsole regeneriert werden, um es dem Enthärtungsprozess erneut zur Verfügung stellen zu können.

Verläuft die Regeneration der Enthärtungsvorrichtung nicht ordnungsgemäß, besteht die Gefahr eines Härtedurchbruchs in der nachfolgenden Wasserinstallation. Dadurch können insbesondere empfindliche technische Anlagen beschädigt werden.

Die DE 198 54 651 C1 beschreibt eine Wasserenthärtungsanlage, bei der die verbliebene Härte von Wasser, welches ein Ionentauscherharz passiert hat, mittels ionenselektiven Elektroden überprüft wird. Allerdings sind ionenselektive Elektroden störanfällig, wartungsintensiv und teuer. Auch wird hier nur die Einleitung einer Regeneration überwacht, nicht die Regeneration selbst.

Die DE 198 41 568 A1 beschreibt eine Wasserenthärtungsanlage, bei der die elektrische Leitfähigkeit von Wasser vor und nach Passieren eines Ionentauscherharzes verglichen wird, um einen Regenerationszeitpunkt für das Ionentauscherharz zu bestimmen. Das Verfahren ist jedoch recht ungenau, da die Leitwertdifferenz infolge des Austauschens von Ionen beim Enthärten recht gering ist. Auch wird hier wiederum nur die Einleitung einer Regeneration überwacht, nicht die Regeneration selbst.

Die US 6,738,666 B2 beschreibt ein Verfahren zur Überwachung der Regeneration einer Wasserenthärtungsanlage. Dabei wird die Salzkonzentration einer Regeneriermittellösung sowie der Verbrauch an Regeneriermittellösung während einer Regeneration mittels Sensoren in einem Regeneriermittelbehälter bzw. einer Zuführleitung vom Regeneriermittelbehälter zu einem Harzbehälter überwacht.

Diese Überwachung der Salzkonzentration und des Regeneriermittelverbrauchs kann jedoch nicht sicherstellen, dass das Regeneriermittel tatsächlich in das Ionentauscherharz geflossen ist und dass es auch zu Ionenaustauschprozessen gekommen ist.

### Aufgabe der Erfindung

Es ist die Aufgabe der vorliegenden Erfindung, ein Verfahren zur Verfügung zu stellen, mit dem auf einfache und zuverlässige Weise die ordnungsgemäße Durchführung einer Regeneration einer Enthärtungsvorrichtung einer Wasserenthärtungsanlage überwacht werden kann, insbesondere so dass Härtedurchbrüche aufgrund einer fehlerhaften Regeneration zuverlässig ausgeschlossen werden können.

### Kurze Beschreibung der Erfindung

Diese Aufgabe wird gelöst durch ein Verfahren der eingangs genannten Art, das dadurch gekennzeichnet ist,
dass die Leitfähigkeit der verbrauchten Regeneriermittellösung und/oder des Spülwassers im Spülkanal während einer Regeneration mittels eines Leitfähigkeitssensors bestimmt wird, und dass die experimentell bestimmte Leitfähigkeit mit einem in der elektronischen Steuereinrichtung abgespeicherten Soll-Leitfähigkeitsprofil verglichen wird.

Die Erfindung schlägt vor, die Leitfähigkeit von durch den Spülkanal ablaufendem Wasser, also verbrauchter Regeneriermittellösung und/oder Spülwasser, während des Regenerationsprozesses zu überwachen. Alle Flüssigkeiten, die während einer Regeneration die Enthärtungsvorrichtung durchströmen, laufen durch den Spülkanal ab. Aus der Leitfähigkeit des ablaufenden Wassers kann insbesondere leicht geschlossen werden, ob ausreichend Regeneriermittellösung in die Enthärtervorrichtung gelangt ist und wieder ausgespült wurde. Dazu wird erfindungsgemäß zwischen experimentellen Leitfähigkeitswerten, die im Spülkanal während der Regeneration gemessen wurden, und Soll-Leitfähigkeitswerten, die nach dem zugehörigen Fortschritt der Regeneration bei ordnungsgemäßem Ablauf zu erwarten sind, verglichen.

Die Gesamtheit der Soll-Leitfähigkeitswerte, die als Funktion des Fortschritts der Regeneration zu erwarten sind, wird als Soll-Leitfähigkeitsprofil bezeichnet. Das Soll-Leitfähigkeitsprofil wird vorab für den spezifischen Typ der Wasserenthärtungsanlage und den eingerichteten Regenerationsablauf über eine Kalibrier-Regeneration bestimmt und in der Steuereinrichtung gespeichert. Es enthält eine Vielzahl von Leitfähigkeitswerten, typischerweise als Funktion der Zeit während der Regeneration oder als Funktion der im Laufe der Regeneration bisher durch den Spülkanal abgelaufenen Flüssigkeitsmenge. Im ersteren Fall genügt im Spülkanal ein Leitfähigkeitssensor; in zweiten Fall ist zusätzlich ein Durchflussmesser oder Volumenzähler (in der Regel ebenfalls im Spülkanal) vorgesehen, der von der Steuereinrichtung während der Regeneration mit ausgewertet wird.

Die zu überwachende Regenerationen und die Kalibrier-Regeneration sollten grundsätzlich unter gleichen Bedingungen (Menge der eingeführten Regeneriermittellösung, zeitlicher Verlauf der Flüssigkeitsflüsse, Gleich- oder Gegenstromspülung, etc.) stattfinden, um eine leichte Vergleichbarkeit der experimentellen Leitfähigkeitswerte und des Soll-Leitfähigkeitsprofils zu gewährleisten. Wird das Soll-Leitfähigkeitsprofil als Funktion der im Laufe der Regeneration bisher durch den Spülkanal abgelaufenen Flüssigkeitsmenge hinterlegt, so lassen bestimmte Schwankungen der äußeren Bedingungen, insbesondere ein nicht-konstanter Wasserdruck des Rohwassers, die Vergleichbarkeit der experimentellen Leitfähigkeitswerte und der zugehörigen Leitfähigkeitswerte des Soll-Leitfähigkeitsprofils unberührt.

Bei einer signifikanten Abweichung eines oder mehrerer experimentell bestimmter Leitfähigkeitswerte vom Soll-Leitfähigkeitsprofil, die auf einen fehlerhaften Verlauf der Regeneration schließen lässt (insbesondere einen nicht ausreichenden Grad von Ersetzung der Ca- und Mg-Ionen gegen Na-Ionen im Ionentauscherharz der Enthärtungsvorrichtung), kann erfindungsgemäß eine Reaktion der Steuereinrichtung erfolgen, typischerweise eine Ausgabe einer Warnmeldung, ein Abbruch der Regeneration und/oder ein Sperren des Wasserflusses durch die Wasserenthärtungsanlage oder nachfolgende Leitungsabschnitte. Die Reaktion der Steuereinrichtung macht kenntlich, dass derzeit nur Wasser von zweifelhafter Qualität, insbesondere wahrscheinlich höherer Härte als gewünscht, zur Verfügung steht, und/oder sperrt den Verbrauch des Wassers von zweifelhafter Qualität. Dadurch wird verhindert, dass ein Härtedurchbruch unbemerkt bleiben könnte, und nachfolgende empfindliche technische Geräte können geschützt werden.

Die Leitfähigkeit der verbrauchten Regeneriermittellösung bzw. allgemeiner des ablaufenden Wassers im Spülkanal ändert sich während des Regenerationsprozesses in charakteristischer Weise. Bei einer typischen Regeneration steigt zu Beginn der Regeneration während der Besalzung die Leitfähigkeit stark an. Beim anschließenden Spülen nimmt die Leitfähigkeit exponentiell ab. Das den Regenerationsprozess abschließende Erstfiltrat (Ausspülen letzter Reste an Regeneriermittellösung in Betriebsfließrichtung unmittelbar vor Wiederinbetriebnahme des Tanks mit frisch regenerierten Ionenaustauscherharz) führt nochmals zu einem geringen Anstieg der Leitfähigkeit, die dann wieder exponentiell auf den Leitfähigkeitswert des Rohwassers abfällt.

Durch Überwachung der Leitfähigkeit des ablaufenden Wassers bzw. deren charakteristischer Änderung wird geprüft, ob der Regenerationsvorgang ordnungsgemäß durchgeführt wurde. Eine Prüfung ohne Beanstandung wiederum garantiert, dass Wasser, dass anschließend durch das Ionentauscherharz fließt, enthärtet wird und die Wasserenthärtungsanlage weiches Wasser liefert.

Für die Überwachung wird das gemessene Leitfähigkeitsprofil mit dem in der elektronischen Steuereinrichtung abgespeicherten Leitfähigkeitsprofil verglichen. Die im Rahmen der Erfindung einzusetzenden Leitfähigkeitssensoren sind billig und wenig störanfällig. Dagegen sind calciumsensitive Elektroden zur Kontrolle des Weichwassers teuer, wartungsintensiv und störanfällig. Eine Kontrolle des Weichwassers mittels Leitfähigkeitsmessung im Weichwasser ist nicht zuverlässig möglich, da sich die Leitfähigkeit beim Ionenaustausch (im Gegensatz zur Entsalzung) nur wenig ändert.

### Bevorzugt Varianten der Erfindung

Bei einer bevorzugten Variante des erfindungsgemäßen Verfahrens wird die Leitfähigkeit der verbrauchten Regeneriermittellösung und/oder des Spülwassers im Spülkanal während der Regeneration kontinuierlich bestimmt. Durch kontinuierliche Messung der Leitfähigkeit kann ein sehr genaues, quasi lückenloses experimentelles Leitfähigkeitsprofil erhalten werden, das mit dem in der elektronischen Steuereinrichtung abgespeicherten Leitfähigkeitsprofil verglichen wird. Störungen können besonders schnell und sicher erkannt werden.

Bei einer alternativen Variante des erfindungsgemäßen Verfahrens wird die Leitfähigkeit der verbrauchten Regeneriermittellösung und/oder des Spülwassers im Spülkanal während der Regeneration in zeitlichem Abstand wiederholt bestimmt. Diese Variante ist weniger aufwändig, insbesondere bei der Datenverarbeitung. Die Zahl der Messpunkte sollte so groß sein, dass der charakteristische Verlauf des Leitfähigkeitsprofils nachgebildet werden kann; typischerweise werden über eine Regeneration zwischen 10 und 30 Messpunkte verwendet. Mit dieser Variante kann eine ausreichend zuverlässige Regenerationsüberwachung erfolgen. Im einfachsten Fall ist der zeitliche Abstand zwischen den Messpunkten konstant.

Eine vorteilhafte Weiterentwicklung dieser Verfahrensvariante sieht vor, dass ein im Spülkanal angeordnetes Durchflussmessgerät die abgeleitete Menge an verbrauchter Regeneriermittellösung und/oder Spülwasser bestimmt, und dass die Bestimmung der Leitfähigkeit der verbrauchten Regeneriermittellösung und/oder des Spülwassers im Spülkanal während der Regeneration wiederholt wird, wenn ein vorgegebenes Volumen an verbrauchter Regeneriermittellösung und/oder Spülwasser durch den Spülkanal abgeleitet wurde. In dieser Variante wirken sich gewisse Schwankungen in den Betriebsbedingungen, insbesondere ein schwankender Rohwasserdruck und entsprechend schwankende Durchflussgeschwindigkeiten auch der verbrauchten Regeneriermittellösung und/oder des Spülwassers, in der Überwachung nicht aus, was die Zuverlässigkeit der Überwachung verbessert. Durchflussmessgeräte bzw. Volumenmessgeräte sind vergleichsweise preisgünstig.

Besonders bevorzugt ist eine Verfahrensvariante, bei der die Leitfähigkeit der verbrauchten Regeneriermittellösung und/oder des Spülwassers im Spülkanal in verschiedenen, definierten Betriebssituationen der Regeneration bestimmt wird. Definierte Betriebssituationen während des Regenerationsvorgangs sind die Besalzung, das anschließende Spülen und schließlich das Erstfiltrat (Ausspülen letzter Reste an Regeneriermittellösung in Betriebsfließrichtung unmittelbar vor Wiederinbetriebnahme des Tanks mit frisch regenerierten Ionenaustauscherharz). Jede definierte Betriebssituation hat einen charakteristischen Verlauf der Leitfähigkeit. Werden Messwerte aus verschiedenen definierten Betriebssituationen berücksichtigt, so ist die Überwachung besonders zuverlässig.

Bei einer bevorzugten Weiterentwicklung dieser Variante wird die Leitfähigkeit in den Betriebssituationen
- Besalzung,
- Spülen und
- Erstfiltrat
bestimmt. Die Zuverlässigkeit der Überwachung ist besonders hoch, wenn die Leitfähigkeit in allen drei Betriebssituationen überwacht wird.

Besonders bevorzugt ist eine Verfahrensvariante, die vorsieht, dass in der Steuereinrichtung zum Soll-Leitfähigkeitsprofil auch eine maximal zulässige Abweichung vom Soll-Leitfähigkeitsprofil abgespeichert ist, und dass die Steuereinrichtung einen Fehler im Regenerationsverlauf feststellt, wenn eine experimentell bestimmte Leitfähigkeit mehr als die abgespeicherte, maximal zulässige Abweichung vom abgespeicherten Soll-Leitfähigkeitsprofil abweicht. Mit anderen Worten wird ein Soll-Leitfähigkeitsbereich als Funktion der Zeit oder der abgeleiteten Wassermenge in der Steuereinrichtung abgespeichert. Die Steuereinrichtung prüft jeweils, ob die zu einem bestimmten Zeitpunkt oder nach einer bestimmten abgeleiteten Wassermenge experimentell bestimmte Leitfähigkeit innerhalb des zu diesem Zeitpunkt oder dieser Wassermenge gehörenden Soll-Leitfähigkeitsbereichs liegt. Dadurch können bei ordnungsgemäßem Regenerationsverlauf normale, unbedenkliche Leitfähigkeitsschwankungen von signifikanten, auf eine Betriebsstörung hindeutende Leitfähigkeitsausschläge leicht unterschieden werden. Typischerweise ist die zulässige Abweichung relativ definiert, beispielsweise mit einer maximal zulässigen Relativabweichung der experimentellen Leitfähigkeit von 10% gegenüber der Leitfähigkeit gemäß Soll-Leitfähigkeitsprofil zum zugehörenden Zeitpunkt oder nach der zugehörigen Wassermenge im Laufe der Regeneration. Für verschiedene Phasen (Betriebszustände) der Regeneration können verschiedene zulässige Abweichungen vorgesehen sein. Im Falle von absolut definierten zulässigen Abweichungen wird bevorzugt in der dritten Phase (Erstfiltrat) eine deutlich kleinere zulässige Abweichung gewählt als in den ersten beiden Phasen (Besalzung, Spülen). Die zulässige Abweichung zum Soll-Leitfähigkeitsprofil kann nach oben und unten jeweils gleich oder aber verschieden (und insbesondere auch einseitig) sein.

Ebenfalls bevorzugt ist eine Verfahrensvariante, bei der die Steuereinrichtung einen Fehler im Regenerationsverlauf feststellt, wenn eine Summe von im Laufe der Regeneration bisher festgestellten Einzelabweichungen, ermittelt jeweils aus der Differenz zwischen experimentell ermitteltem Leitfähigkeitswert und dem zugehörigen Leitfähigkeitswert gemäß Soll-Leitfähigkeitsprofil, einen abgespeicherten Grenzwert überschreitet. Eine Einzelabweichung entspricht in der Regel dem absoluten Betrag der Differenz oder dem Quadrat der Differenz. Man beachte, dass die Differenz absolut oder (bevorzugt) relativ bezüglich des Soll-Leitfähigkeitswerts bestimmt werden kann. In dieser Variante führen einzelne experimentell festgestellte Leitfähigkeitsspitzen oder -dellen noch nicht zur Feststellung eines Fehlers, was die Gefahr von Fehlalarmen verringert. Beispielsweise wird als Einzelabweichung einer Leitfähigkeitsmessung der absolute Betrag der relativen Differenz von experimentellem Leitwert zum Sollwert angesetzt. Weiterhin sei im Mittel eine relative Differenz von 10% je Messung akzeptabel, und im Laufe eines Regenerationszyklus finden 12 Messungen statt. Sobald die Summe der Einzelabweichungen den Grenzwert von 120% überschreitet, wird ein Fehler im Regenerationsverlauf festgestellt. Erreicht die Summe nach den 12 Messungen den Grenzwert nicht, verlief die Regeneration normal.

Bei einer vorteilhaften Verfahrensvariante gibt ein Signalgeber ein Signal, wenn die Steuereinrichtung einen Fehler im Regenerationsverlauf festgestellt hat. Ein Fehler im Regenerationsverlauf wird über den Vergleich der experimentell bestimmten Leitfähigkeiten und dem abgespeicherten Soll-Leitfähigkeitsprofil festgestellt; das Signal informiert über einen festgestellten Fehler. Als Signal kommen insbesondere optische und/oder akustische Signale und/oder Funksignale in Frage. Ein Funksignal kann z.B. auf ein Handy übertragen werden, um einen Nutzer darüber zu informieren, dass die Regeneration nicht ordnungsgemäß durchgeführt wurde und die Wasserenthärtungsanlage derzeit nur Hartwasser liefert.

Bei einer anderen, vorteilhaften Verfahrensvariante ist vorgesehen, dass eine Absperrvorrichtung schließt und den Wasserfluss in die gesamte, der Wasserenthärtungsanlage nachgeschalteten Installation unterbricht, wenn die Steuereinrichtung einen Fehler im Regenerationsverlauf festgestellt hat. In diesem Fall wird also die komplette Wasserversorgung unterbrochen. Dadurch werden alle nachgeschalteten Verbraucher vor Wasser zweifelhafter Qualität geschützt.

Eine alternative, vorteilhafte Verfahrensvariante sieht vor, dass eine Absperrvorrichtung schließt und den Wasserfluss durch ein der Wasserenthärtungsanlage nachgeschaltetes Wasserbehandlungsgerät unterbricht, wenn die Steuereinrichtung einen Fehler im Regenerationsverlauf festgestellt hat. Hier ist die Wasserversorgung lediglich vor einem oder mehreren, ausgewählten nachgeschalteten Geräten unterbrochen, die zwingend Weichwasser benötigen (z.B. Umkehrosmoseanlagen); die übrige nachgeschaltete Installation wird mit Hartwasser oder mit "zweifelhaftem" Weichwasser versorgt.

Bei einer bevorzugten Verfahrensvariante ist vorgesehen, dass die Steuereinrichtung die Wasserhärte von der Enthärtungsvorrichtung zufließendem Rohwasser sowie die Menge des von der Enthärtungsvorrichtung enthärteten Wassers zur Bestimmung einer verbleibenden Kapazität der Enthärtungsvorrichtung überwacht und rechtzeitig vor Erschöpfung der Kapazität der Enthärtungsvorrichtung eine Regeneration der Enthärtungsvorrichtung automatisch einleitet. Dadurch kann die Erschöpfung der Enthärtungsvorrichtung besonders genau überwacht werden, so dass sowohl Härtedurchbrüche durch zu späte Regenerationen als auch Salzsoleverschwendung durch zu vorzeitige Regenerationen vermieden werden.

In den Rahmen der vorliegenden Erfindung fällt auch eine Wasserenthärtungsanlage, wobei die Wasserenthärtungsanlage umfasst
- eine Enthärtungsvorrichtung, insbesondere umfassend mindestens einen Tank mit einem Ionentauscherharz,
- ein Vorratsgefäß, in dem festes Regeneriersalz zur Herstellung einer Regeneriermittellösung und/oder Regeneriermittellösung bevorratet ist,
- einen Spülkanal zur Ableitung von verbrauchter Regeneriermittellösung und Spülwasser während einer Regeneration,
- eine elektronische Steuereinrichtung, insbesondere zur automatischen Auslösung und Überwachung einer Regeneration der Enthärtungsvorrichtung mit Regeneriermittellösung, dadurch gekennzeichnet, dass im Spülkanal ein Leitfähigkeitssensor angeordnet ist,
und dass die elektronische Steuereinrichtung einen Speicher mit einem abgespeicherten Soll-Leitfähigkeitsprofil für während einer Regeneration über den Spülkanal abgeleitete verbrauchte Regeneriermittellösung und/oder Spülwasser umfasst. Durch die Speicherung eines Soll-Leitfähigkeitsprofils für über den Spülkanal abgeleitete verbrauchte Regeneriermittellösung und/oder Spülwasser ist eine zuverlässige Überwachung des Regenerationsprozesses einer Wasserenthärtungsanlage auf einfache Art und Weise möglich. Die Leitfähigkeit ändert sich während einer ordnungsgemäßen Regeneration in charakteristischer Weise. Zur Erfassung der Messdaten (d.h. der experimentellen Leitfähigkeitswerte) ist im Spülkanal ein Leitfähigkeitssensor angeordnet. Leitfähigkeitssensoren sind kostengünstig und wartungsarm.

Bevorzugt ist eine Ausführungsform der erfindungsgemäßen Wasserenthärtungsanlage, bei der im Spülkanal ein Durchflussmessgerät angeordnet ist. Das Durchflussmessgerät im Spülkanal erfasst die abgeleitete Menge an verbrauchter Regeneriermittellösung und Spülwasser. Die Information über die abgeleitete Wassermenge kann zur Auslösung der Leitfähigkeitsmessungen eingesetzt werden. Der Leitfähigkeitssensor bestimmt beispielsweise die Leitfähigkeit der verbrauchten Regeneriermittellösung und/oder des Spülwassers im Spülkanal immer dann, wenn ein vorgegebenen Volumen wie 500 ml Flüssigkeit durch den Spülkanal geflossen sind. Das vorgegebene Volumen kann auch größer oder kleiner gewählt werden, je nach der gewünschten Überwachungsgenauigkeit.

Bevorzugt ist auch eine Ausführungsform, bei der die elektronische Steuereinrichtung einen Speicher mit einer abgespeicherten, maximal zulässigen Abweichung zum Soll-Leitfähigkeitsprofil und/oder einen Speicher mit einem abgespeicherten Grenzwert für eine maximale Summe von im Laufe einer Regeneration festgestellten Einzelabweichungen von experimentellen Leitfähigkeitswerten gegenüber dem Soll-Leitfähigkeitsprofil aufweist. Mit der Information aus dem Speicher kann die Steuereinrichtung auf einfache Weise entscheiden, ob eine festgestellte Abweichung zwischen experimentellen Leitfähigkeitswerten und Soll-Leitfähigkeitsprofil noch im Rahmen normaler betriebsbedingter Schwankungen liegt, oder bereits auf eine Fehlfunktion bei der Regeneration hindeutet.

Ebenfalls bevorzugt ist eine Ausführungsform, bei der die Wasserenthärtungsanlage eine Absperrvorrichtung umfasst. Durch die Absperrvorrichtung kann eine gesamte nachfolgende Installation oder auch ein einzelnes oder mehrere ausgewählte Geräte vor hartem Wasser geschützt werden. Dies ist besonders bei nachgeschalteten Geräten, die zwingend Weichwasser benötigen (z.B. Umkehrosmoseanlagen) wichtig. Die Absperrvorrichtung unterbricht den Wasserfluss, wenn die Leitfähigkeit der über den Spülkanal abgeleiteten Flüssigkeiten anormale Abweichungen aufweisen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigt:
- Fig. 1: eine schematische Darstellung einer erfindungsgemäßen Wasserenthärtungsanlage mit einem Leitfähigkeitssensor im Spülkanal, zur Verwendung in einem erfindungsgemäßen Verfahren;
- Fig. 2: ein erstes Leitfähigkeitsprofil, gemessen im Spülkanal einer Wasserenthärtungsanlage entsprechend Fig. 1, als Funktion der Zeit während einer Regeneration;
- Fig. 3: ein zweites Leitfähigkeitsprofil, gemessen im Spülkanal einer Wasserenthärtungsanlage entsprechend Fig. 1, als Funktion der Durchflussmenge während einer Regeneration.

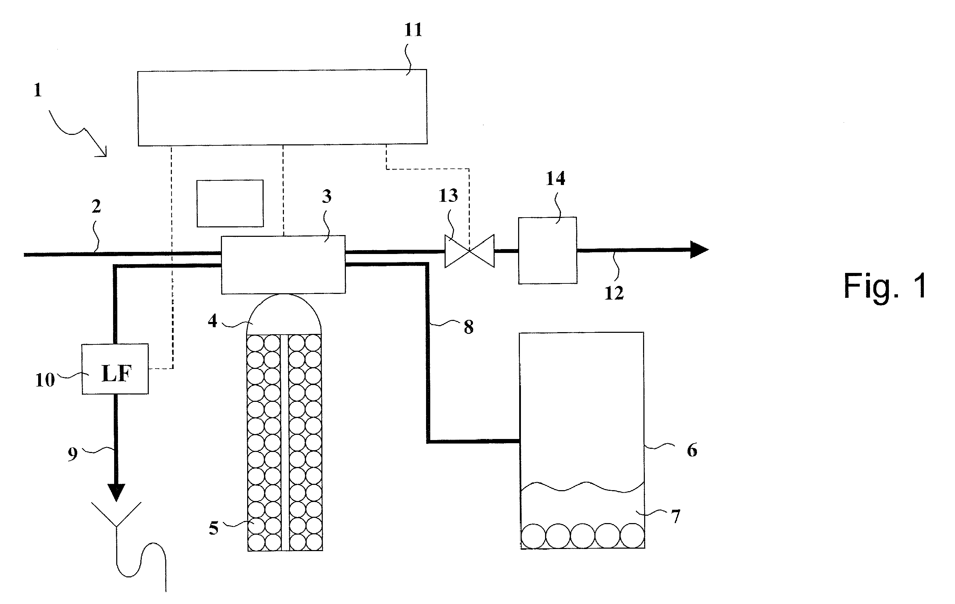

### Die Figur 1 zeigt beispielhaft eine erfindungsgemäße

Wasserenthärtungsanlage 1, umfassend eine Zulaufleitung 2 für hartes Wasser, die in einen Steuerkopf 3 mit mehreren Steuerventilen (nicht im Einzelnen dargestellt) mündet. An den Steuerkopf 3 angeschlossen ist eine regenerierbare Enthärtungsvorrichtung 4, hier umfassend einen Tank gefüllt mit Ionentauscherharz 5. Weiterhin angeschlossen an den Steuerkopf 3 ist eine Ablaufleitung 12 für enthärtetes oder teilenthärtetes Wasser, in der ein Absperrventil 13 angeordnet ist. Über die Ablaufleitung 12 wird hier ein nachgeschaltetes Wasserbehandlungsgerät 14 (z. B. eine Umkehrosmoseanlage) versorgt.

Im Normalbetrieb der Wasserenthärtungsanlage 1 strömt aus der Zulaufleitung 2 einfließendes Rohwasser in die Enthärtungsvorrichtung 4, wird dort enthärtet und anschließend der Ablaufleitung 12 zugeführt, gegebenenfalls vermischt mit Rohwasser ("Verschneidung"). Eine etwaige Verschneidung wird über eine elektronische Steuereinrichtung 11 kontrolliert.

Im Regenerationsbetrieb wird über eine Zuführleitung 8 für Regeneriermittellösung eine Regeneriermittellösung 7 (etwa eine konzentrierte NaCl-Salzsole) aus einem Vorratsgefäß 6 über den Steuerkopf 3 der Enthärtungsvorrichtung 4 zugeführt. Verbrauchte Regeneriermittellösung wird über einen Spülkanal 9 abgeleitet. Nach einer Besalzung des Ionentauscherharzes 5 mit Regeneriermittellösung wird das Ionentauscherharz 5 mit Rohwasser gespült; dieses Spülwasser wird ebenfalls über den Spülkanal 9 abgeleitet.

Im Spülkanal 9 ist ein Leitfähigkeitssensor 10 angeordnet, mit dem die elektrische Leitfähigkeit des Abwassers bestimmt werden kann. Die elektronische Steuereinrichtung 11 vergleicht erfindungsgemäß die experimentellen Leitfähigkeitswerte mit zugehörigen Soll-Leitfähigkeitswerten eines abgespeicherten Soll-Leitfähigkeitsprofils, um die ordnungsgemäße Durchführung der Regeneration des Ionentauscherharzes 5 zu überprüfen. Im Falle einer nicht ordnungsgemäßen Regeneration schließt die Steuereinrichtung 11 das Absperrventil 13, um das Gerät 14 vor Wasser von zweifelhafter Qualität, insbesondere zu hartem Wasser, zu schützen.

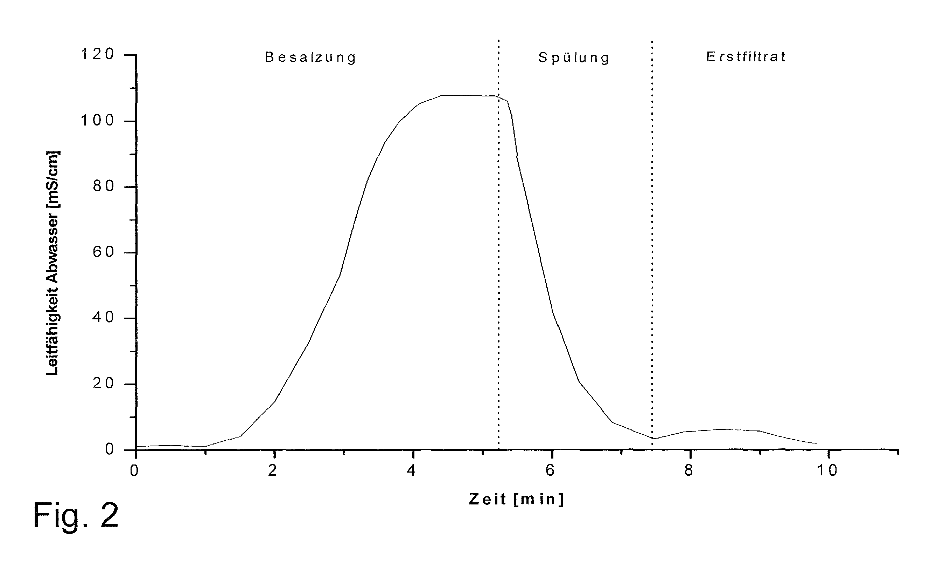

**Figur 2** zeigt einen typischen Verlauf der Leitfähigkeit gemessen im Spülkanal einer beispielhaften Wasserenthärtungsanlage, etwa der in Fig. 1 dargestellten Wasserenthärtungsanlage, während einer Regeneration als Funktion der Zeit.

Die Leitfähigkeit der Flüssigkeit im Spülkanal ändert sich während des Regenerationsprozesses in charakteristischer Weise. Zu Beginn der Regeneration während der Besalzung (Phase 1) steigt die Leitfähigkeit nach einer kurzen Zeit stark an (hier auf einen Wert bis ca. 110 mS/cm), sobald die Regeneriermittellösung das Wasser in der Enthärtungsvorrichtung verdrängt hat und in Form von verbrauchter Sole in den Spülkanal gelangt. Beim anschließenden Spülen (Phase 11) nimmt die Leitfähigkeit (als Verdrängungsprozess im Spülkanal wiederum zeitverzögert messbar) exponentiell ab bis auf einen Wert, der geringfügig oberhalb der Leitfähigkeit des reinen Rohwassers liegt (hier ca. 3 mS/cm). Das den Regenerationsprozess abschließende Erstfiltrat (Phase III, Ausspülen letzter Reste an Regeneriermittellösung in Betriebsfließrichtung unmittelbar vor Wiederinbetriebnahme des Tanks mit frisch regenerierten Ionenaustauscherharz) führt nochmals zu einem geringen Anstieg der Leitfähigkeit (im dargestellten Beispiel auf ca. 5 mS/cm), die dann wieder exponentiell auf den Leitfähigkeitswert des Rohwassers (ca. 1 mS/cm) abfällt.

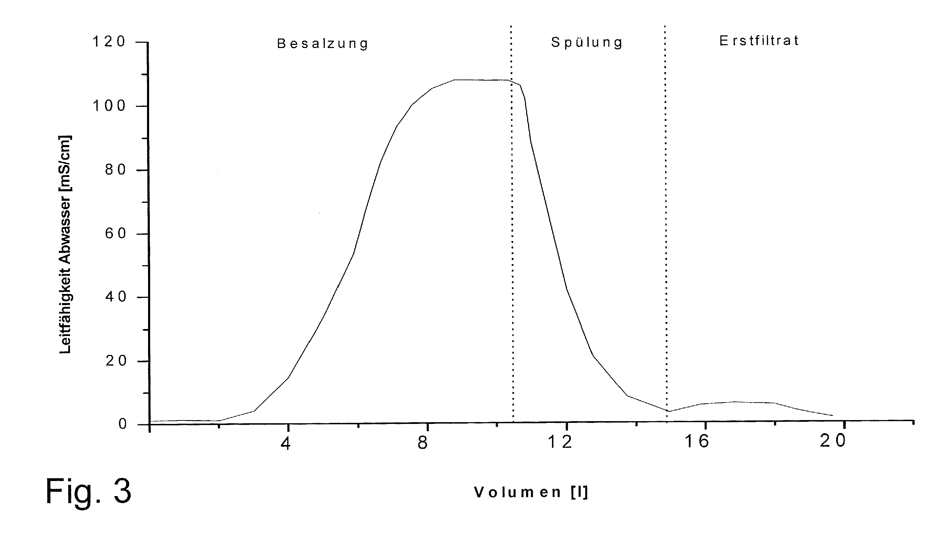

**Figur 3** zeigt einen typischen Verlauf der Leitfähigkeit gemessen im Spülkanal einer beispielhaften Wasserenthärtungsanlage, etwa der in Fig. 1 dargestellten Wasserenthärtungsanlage, während einer Regeneration als Funktion der Durchflussmenge des Abwassers im Spülkanal.

Für die Bestimmung der Leitfähigkeit als Funktion der Durchflussmenge ist ein zusätzlicher Durchflussmesser, am einfachsten angeordnet im Spülkanal, notwendig; das so bestimmte Profil ist unabhängig von der Durchflussgeschwindigkeit in der Enthärtungsvorrichtung, die mit dem anliegenden Rohwasserdruck schwanken kann.

Erfindungsgemäß wird ein Soll-Leitfähigkeitsprofil individuell für jeden Anlagentyp vor Inbetriebnahme in einer Kalibriermessung experimentell bestimmt und in der elektronischen Steuereinrichtung abgespeichert. Das während des Betriebs der Wasserenthärtungsanlage gemessene Leitfähigkeitsprofil wird dann mit dem in der elektronischen Steuereinrichtung abgespeicherten Soll-Leitfähigkeitsprofil verglichen.

Folgende anlagentypische Faktoren können den spezifischen Verlauf des Leitfähigkeitsprofils während einer Regeneration beeinflussen:
□ Vorverdünnung der Regeneriermittellösung
□ Dauer bzw. Flüssigkeitsvolumen der einzelnen Phasen
□ Fließgeschwindigkeit
□ Pausen (z.B. Stagnation von Regeneriermittellösung im Harzbehälter zur Steigerung der Salzausbeute; Spülung und/oder Erstfiltrat unmittelbar vor Wiederinbetriebnahme des frisch regenerierten Harzbehälters aus hygienischen Gründen)
□ Fließrichtung von Regeneriermittellösung und Spülwasser im Harzbehälter (Gleichstrom- oder Gegenstromregeneration)
□ bei Mehrsäulenanlagen: Parallel- oder Pendelbetrieb

Eine signifikante, nicht mehr zulässige Abweichung kann z.B. mehr als 10 % vom abgespeicherten Profil betragen. Eine zulässige absolute Abweichung kann abhängig von den definierten Betriebssituationen während des Regenerationsvorgangs unterschiedlich gewählt werden. Beispielsweise ist während der Besalzung und der Spülung eine absolute Abweichung vom abgespeicherten Profil von maximal 10 mS/cm zulässig, während diese beim Erstfiltrat lediglich maximal 100 µS/cm betragen darf. Ebenso können statt der absoluten oder relativen Abweichungen die Gradienten in ansteigenden Abschnitten und abfallenden Abschnitten ("Steigungen und Fällungen") im Leitfähigkeitsprofil überwacht werden.

In der Praxis werden typischerweise sowohl das Soll-Leitfähigkeitsprofil als auch das experimentelle Leitfähigkeitsprofil über eine gewisse Anzahl von Messpunkten angenähert. Die ordnungsgemäße Regeneration wird anhand einer ausreichenden Übereinstimmung der Soll-Leitfähigkeiten und der experimentellen Leitfähigkeiten an den Messpunkten festgestellt. In der Regel wird für das Soll-Leitfähigkeitsprofil zusätzlich eine zulässige Abweichung allgemein, abschnittweise oder für jeden Messpunkt individuell mit gespeichert. Ein Soll-Leitfähigkeitsprofil kann dann in Form einer Tabelle abgespeichert werden, siehe das Beispiel in Tabelle 1:

**Tabelle 1**

| Messpunkt bei | 1 min | 2 min | 3 min | 4 min | 5 min | 6 min | 7 min | 8 min | 9 min | 10 min |
|---|---|---|---|---|---|---|---|---|---|---|
| Soll-Leitfähigkeit (mS/cm) | 3 | 14 | 59 | 104 | 108 | 43 | 9 | 6 | 8 | 3 |
| Zuläss. Abweichung (mS/cm) | 2 | 2 | 6 | 10 | 11 | 4 | 2 | 2 | 2 | 2 |

Im angegebenen Fall wurde beispielsweise eine zulässige relative Abweichung von maximal 10%, mindestens jedoch 2 mS/cm eingespeichert.

Entsprechend der Lage der Messpunkte im Soll-Leitfähigkeitsprofil werden dann während der Regeneration experimentelle Leitfähigkeitswerte im Spülkanal bestimmt, hier zum ersten Mal eine Minute nach Beginn der Regeneration, dann zwei Minuten nach Beginn der Regeneration und so fort. Weicht ein experimenteller Leitfähigkeitswert an einem Messpunkt zu stark vom zughörigen Leitfähigkeitswert des Soll-Leitfähigkeitsprofils ab, so stellt die Steuereinrichtung einen fehlerhaften Regenerationsverlauf fest und nimmt entsprechende Schaltungen vor, etwa die Ausgabe eines Warnsignals oder das Schließen eines Absperrventils. Wird beispielsweise beim Messpunkt nach sechs Minuten eine Leitfähigkeit von 50 mS/cm gemessen, so liegt diese außerhalb des im Beispiel zulässigen Intervalls von 39-47 mS/cm (43 +/- 4 mS/cm) dieses Messpunkts, und eine fehlerhafte Regeneration wird festgestellt.

Eine fehlerhafte Regeneration kann auch über eine aufsummierte Fehlergröße über die Messpunkte abgeprüft werden. Das Vorgehen soll beispielhaft anhand der Tabelle 2 verdeutlicht werden.

**Tabelle 2**

| Messpunkt bei | 1 min | 2 min | 3 min | 4 min | 5 min | 6 min | 7 min | 8 min | 9 min | 10 min |
|---|---|---|---|---|---|---|---|---|---|---|
| Soll-Leitfähigkeit (mS/cm) | 3 | 14 | 59 | 104 | 108 | 43 | 9 | 6 | 8 | 3 |
| Exp. Leitfähigkeit (mS/cm) | 1 | 14 | 57 | 100 | 120 | 123 | | | | |
| Betrag Abweichung (mS/cm) | 2 | 0 | 2 | 4 | 12 | 60 | | | | |
| Summierte Abweichung (mS/cm) | 2 | 2 | 4 | 8 | 20 | 80 | | | | |

An jedem Messpunkt der Tabelle 2 wird der experimentelle Leitfähigkeitswert mit dem zughörigen Soll-Leitfähgkeitswert verglichen. Der absolute Betrag der Differenz wird jeweils zu einer aufsummierten Abweichung addiert. Sobald die aufsummierte Abweichung einen abgespeicherten Grenzwert für die gesamte Regeneration überschreitet, hier 30 mS/cm (entsprechend bei 10 Messungen einer mittleren Abweichung von 3 mS/cm je Messpunkt), wird die Regeneration abgebrochen und eine fehlerhafte Regeneration festgestellt. Vorliegend wurde beim sechsten Messpunkt der Grenzwert überschritten, etwa weil der Zufluss der Salzsole nicht unterbrochen werden konnte. Anstelle des absoluten Betrages der Differenz könnte auch jeweils das Quadrat der Differenz zwischen Soll-Leitfähigkeitswert und experimentellem Leitfähigkeitswert aufsummiert werden, um größere Differenzen stärker zu gewichten.

Ein Vergleich zwischen Sol-Leitfähigkeitsprofil und experimentellen Leitfähigkeitswerten ist auch auf andere Weisen möglich. Insbesondere kann das Soll-Leitfähigkeitsprofil als Funktion der Durchflussmenge (etwa alle 2 Liter) angegeben sein. Ebenso kann das Soll-Leitfähigkeitsprofil nicht durch eine Wertetabelle, sondern durch eine geschlossene funktionelle Näherung (etwa eine Polynomentwicklung bis zu einer ausreichenden Ordnung) abgespeichert sein. In diesem Fall kann auf einfache Weise eine quasi kontinuierliche Überwachung der experimentellen Leitfähigkeit erfolgen, da Soll-Werte beliebig dicht zur Verfügung stehen.

## Patentansprüche

1. Verfahren zur Überwachung einer Wasserenthärtungsanlage (1), wobei die Wasserenthärtungsanlage (1) umfasst
- eine Enthärtungsvorrichtung (4), insbesondere umfassend mindestens einen Tank mit einem Ionentauscherharz (5),
- ein Vorratsgefäß (6), in dem festes Regeneriersalz zur Herstellung einer Regeneriermittellösung und/oder eine Regeneriermittellösung (7) bevorratet ist,
- einen Spülkanal (9) zur Ableitung von verbrauchter Regeneriermittellösung und Spülwasser während einer Regeneration,
- eine elektronische Steuereinrichtung (11), insbesondere zur automatischen Auslösung und Überwachung einer Regeneration der Enthärtungsvorrichtung (4) mit Regeneriermittellösung,
**dadurch gekennzeichnet,**
**dass** die Leitfähigkeit der verbrauchten Regeneriermittellösung und/oder des Spülwassers im Spülkanal (9) während einer Regeneration mittels eines Leitfähigkeitssensors (10) bestimmt wird,
und **dass** die experimentell bestimmte Leitfähigkeit mit einem in der elektronischen Steuereinrichtung (11) abgespeicherten Soll-Leitfähigkeitsprofil verglichen wird.

2. Verfahren nach Anspruch 1, **dadurch gekennzeichnet, dass** die Leitfähigkeit der verbrauchten Regeneriermittellösung und/oder des Spülwassers im Spülkanal (9) während der Regeneration kontinuierlich bestimmt wird.

3. Verfahren nach Anspruch 1, **dadurch gekennzeichnet, dass** die Leitfähigkeit der verbrauchten Regeneriermittellösung und/oder des Spülwassers im Spülkanal (9) während der Regeneration in zeitlichem Abstand wiederholt bestimmt wird.

4. Verfahren nach Anspruch 3, **dadurch gekennzeichnet, dass** ein im Spülkanal (9) angeordnetes Durchflussmessgerät die abgeleitete Menge an verbrauchter Regeneriermittellösung und/oder Spülwasser bestimmt, und dass die Bestimmung der Leitfähigkeit der verbrauchten Regeneriermittellösung und/oder des Spülwassers im Spülkanal (9) während der Regeneration wiederholt wird, wenn ein vorgegebenes Volumen an verbrauchter Regeneriermittellösung und/oder Spülwasser durch den Spülkanal (9) abgeleitet wurde.

5. Verfahren nach einem der vorhergehenden Ansprüche, **dadurch gekennzeichnet, dass** die Leitfähigkeit der verbrauchten Regeneriermittellösung und/oder des Spülwassers im Spülkanal (9) in verschiedenen, definierten Betriebssituationen der Regeneration bestimmt wird.

6. Verfahren nach Anspruch 5, **dadurch gekennzeichnet, dass** die Leitfähigkeit in den Betriebssituationen
- Besalzung,
- Spülen und
- Erstfiltrat
bestimmt wird.

7. Verfahren nach einem der vorhergehenden Ansprüche, **dadurch gekennzeichnet, dass** in der Steuereinrichtung (11) zum Soll-Leitfähigkeitsprofil auch eine maximal zulässige Abweichung vom Soll-Leitfähigkeitsprofil abgespeichert ist, und dass die Steuereinrichtung (11) einen Fehler im Regenerationsverlauf feststellt, wenn eine experimentell bestimmte Leitfähigkeit mehr als die abgespeicherte, maximal zulässige Abweichung vom abgespeicherten Soll-Leitfähigkeitsprofil abweicht.

8. Verfahren nach einem der vorhergehenden Ansprüche, **dadurch gekennzeichnet, dass** die Steuereinrichtung (11) einen Fehler im Regenerationsverlauf feststellt, wenn eine Summe von im Laufe der Regeneration bisher festgestellten Einzelabweichungen, ermittelt jeweils aus der Differenz zwischen experimentell ermitteltem Leitfähigkeitswert und dem zugehörigen Leitfähigkeitswert gemäß Soll-Leitfähigkeitsprofil, einen abgespeicherten Grenzwert überschreitet.

9. Verfahren nach einem der vorhergehenden Ansprüche, **dadurch gekennzeichnet, dass** ein Signalgeber ein Signal gibt, wenn die Steuereinrichtung (11) einen Fehler im Regenerationsverlauf festgestellt hat.

10. Verfahren nach einem der Ansprüche 1 bis 9, **dadurch gekennzeichnet, dass** eine Absperrvorrichtung (13) schließt und den Wasserfluss in die gesamte, der Wasserenthärtungsanlage (1) nachgeschalteten Installation unterbricht, wenn die Steuereinrichtung (11) einen Fehler im Regenerationsverlauf festgestellt hat.

11. Verfahren nach Anspruch 1 bis 9, **dadurch gekennzeichnet, dass** eine Absperrvorrichtung (13) schließt und den Wasserfluss durch ein der Wasserenthärtungsanlage (1) nachgeschaltetes Wasserbehandlungsgerät (14) unterbricht, wenn die Steuereinrichtung (11) einen Fehler im Regenerationsverlauf festgestellt hat.

12. Verfahren nach einem der vorhergehenden Ansprüche, **dadurch gekennzeichnet, dass** die Steuereinrichtung (11) die Wasserhärte von der Enthärtungsvorrichtung (4) zufließendem Rohwasser sowie die Menge des von der Enthärtungsvorrichtung (4) enthärteten Wassers zur Bestimmung einer verbleibenden Kapazität der Enthärtungsvorrichtung (4) überwacht und rechtzeitig vor Erschöpfung der Kapazität der Enthärtungsvorrichtung (4) eine Regeneration der Enthärtungsvorrichtung (4) automatisch einleitet.

13. Wasserenthärtungsanlage (1), wobei die Wasserenthärtungsanlage (1) umfasst
- eine Enthärtungsvorrichtung (4), insbesondere umfassend mindestens einen Tank mit einem Ionentauscherharz (5),
- ein Vorratsgefäß (6), in dem festes Regeneriersalz zur Herstellung einer Regeneriermittellösung und/oder Regeneriermittellösung (7) bevorratet ist,
- einen Spülkanal (9) zur Ableitung von verbrauchter Regeneriermittellösung und Spülwasser während einer Regeneration,
- eine elektronische Steuereinrichtung (11), insbesondere zur automatischen Auslösung und Überwachung einer Regeneration der Enthärtungsvorrichtung (4) mit Regeneriermittellösung,
**dadurch gekennzeichnet,**
**dass** im Spülkanal (9) ein Leitfähigkeitssensor (10) angeordnet ist, und dass die elektronische Steuereinrichtung (11) einen Speicher mit einem abgespeicherten Soll-Leitfähigkeitsprofil für während einer Regeneration über den Spülkanal (9) abgeleitete verbrauchte Regeneriermittellösung und/oder Spülwasser umfasst.

14. Wasserenthärtungsanlage (1) nach Anspruch 13, **dadurch gekennzeichnet, dass** im Spülkanal (9) ein Durchflussmessgerät angeordnet ist.

15. Wasserenthärtungsanlage (1) nach einem der Ansprüche 13 oder 14, **dadurch gekennzeichnet, dass** die elektronische Steuereinrichtung (11) einen Speicher mit einer abgespeicherten, maximal zulässigen Abweichung zum Soll-Leitfähigkeitsprofil
und/oder einen Speicher mit einem abgespeicherten Grenzwert für eine maximale Summe von im Laufe einer Regeneration festgestellten Einzelabweichungen von experimentellen Leitfähigkeitswerten gegenüber dem Soll-Leitfähigkeitsprofil aufweist.

16. Wasserenthärtungsanlage (1) nach einem der Ansprüche 13 bis 15, **dadurch gekennzeichnet, dass** die Wasserenthärtungsanlage (1) eine Absperrvorrichtung (13) umfasst.
